# EUROPÄISCHE PATENTSCHRIFT

(11) **EP 1 167 413 B1**
(45) Veröffentlichungstag und Bekanntmachung des Hinweises auf die Patenterteilung: **07.09.2005**
(21) Anmeldenummer: 01113860.9
(22) Anmeldetag: 07.06.2001
(51) Int. Cl.: C08G 18/32, C08G 18/80, C08G 83/00

(54) **Mehrfunktionelle Polyisocyanat-Polyadditionsprodukte**
High functional polyisocyanate polyaddition products
Produits de polyaddition de polyisocyanates ayant une fonctionnalité élevée

(30) Priorität: 23.06.2000 DE 10030869
(43) Veröffentlichungstag der Anmeldung: 02.01.2002
(73) Patentinhaber: BASF Aktiengesellschaft, 67056 Ludwigshafen (DE)
(72) Erfinder: Bruchmann, Bernd, Dr., 67251 Freinsheim (DE); Stiefenhöfer, Konrad, 67280 Ebertsheim (DE)

(56) Entgegenhaltungen:
- EP-A- 1 026 185
- EP-A- 1 054 030
- WO-A-98/52995
- DE-A- 19 524 045

## Beschreibung

Die vorliegende Erfindung betrifft gezielt aufgebaute, mehrfunktionelle Polyisocyanat-Polyadditionsprodukte, bevorzugt Polyurethane und Polyurethanharnstoffe, auf Basis von Di- oder Polyisocyanaten und mit Isocyanatgruppen reaktiven Komponenten, sowie ein Verfahren zu ihrer Herstellung. Die erfindungsgemäßen mehrfunktionellen Polyisocyanat-Polyadditionsprodukte sind vorzugsweise überwiegend OH-terminiert und können u.a. als Bausteine zur Polyurethanherstellung, z.B. zur Herstellung von Lacken, Überzügen, Klebstoffen, Dichtmassen, Gießelastomeren oder Schaumstoffen technisch vorteilhaft eingesetzt werden.

Im Bereich der Polyurethanpolyole sind Produkte bekannt, die aufgebaut werden aus höhermolekularen di- oder trifunktionellen Polyether- oder Polyesterolen und unterschüssigen Mengen an Di- oder Polyisocyanaten. Es resultieren vergleichsweise uneinheitliche, meist lineare Polyurethanpolyole mit hohen Viskositäten und Funktionalitäten zwischen 2 und 4.
Siehe dazu auch Becker/Braun, Kunststoff-Handbuch Bd. 7, Polyurethane, Hanser-Verlag 1993.

WO 97/02304 beschreibt die Herstellung von mehrfunktionellen Polyurethanpolyolen durch Aufbau dendritischer und hyperverzweigter Strukturen mittels spezieller Schutzgruppentechniken. WO 98/52995 beschreibt dendrimere, hochdefinierte Polyurethanpolyole, die sich durch Verwendung von Isocyanaten mit einer primären und einer tertiären NCO-Gruppe und Dialkanolaminen mittels eines schalenförmigen (generationenweisen) Aufbaus herstellen lassen. Jedoch sind die Produkte bedingt durch die vielen Reaktionsschritte und die speziellen, großtechnisch nicht zugänglichen Aufbaukomponenten sehr teuer.

Der Erfindung lag die Aufgabe zugrunde, mittels eines einfachen Verfahrens mehrfunktionelle Polyisocyanat-Polyadditionsprodukte bereitzustellen, deren Strukturen sich leicht an die Erfordernisse der Anwendung anpassen lassen und die aufgrund ihres definierten Aufbaus vorteilhafte Eigenschaften, wie hohe Funktionalität, hohe Reaktivität, geringe Viskosität und gute Löslichkeit in sich vereinen können, sowie ein Verfahren zur Herstellung dieser mehrfunktionellen Polyisocyanat-Polyadditionsprodukte.

Ferner war es eine Aufgabe der Erfindung ein Verfahren bereitzustellen, das es erlaubt, handelsübliche, technische Di- oder Polyole, Di- oder Polyamine oder Aminoalkohole durch Umsetzung in der Funktionalität deutlich zu erhöhen und gegebenenfalls auch in der Art der funktionellen Gruppe zu ändern.

Die Aufgaben konnten erfindungsgemäß gelöst werden, indem ein Additionsprodukt (A) oder ein Polyadditionsprodukt (P), das durch Umsetzung einer mindestens trifunktionellen mit Isocyanatgruppen reaktiven Komponente (a1), gegebenenfalls in Mischung mit einer difunktionellen, mit Isocyanatgruppen reaktiven Komponente (a2), mit einem Di- oder Polyisocyanat (b) erhältlich ist und eine Isocyanatgruppe und im Mittel mehr als eine mit Isocyanat reaktive Gruppe aufweist, mit einer weiteren mit Isocyanatgruppen reaktiven Komponente (c) zu dem erfindungsgemäßen, gezielt aufgebauten mehrfunktionellen Polyisocyanat-Polyadditionsprodukt umgesetzt wird.

Ein Gegenstand der Erfindung ist somit ein Verfahren zur Herstellung von mehrfunktionellen Polyisocyanat-Polyadditionsprodukten, umfassend
(i) Herstellen eines Additionsproduktes (A) durch Umsetzen einer
   (a) mit Isocyanatgruppen reaktiven, mindestens trifunktionellen Komponente (a1) oder
      einer mit Isocyanatgruppen reaktiven difunktionellen Komponente (a2) oder mit einem Gemisch aus den Komponenten (a1) und (a2) mit
   (b) einem Di- oder Polyisocyanat,
      wobei das Umsetzungsverhältnis so gewählt wird, dass im Mittel das Additionsprodukt (A) eine Isocyanatgruppe und mehr als eine mit Isocyanatgruppen reaktive Gruppe enthält,
(ii) gegebenenfalls intermolekulare Additionsreaktion des Additionsprodukts (A) zu einem Polyadditionsprodukt (P), das im Mittel eine Isocyanatgruppe und mehr als zwei mit Isocyanatgruppen reaktive Gruppen enthält und
(iii) Umsetzen des Additionsproduktes (A) oder des Polyadditionsproduktes (P) mit einer mindestens difunktionellen, mit Isocyanatgruppen reaktiven Komponente (c).

In einer bevorzugten Ausführungsform weist dabei mindestens eine der Komponenten (a) oder (b) funktionelle Gruppen mit gegenüber den funktionellen Gruppen der anderen Komponente unterschiedlicher Reaktivität auf.

Ein weiterer Gegenstand der Erfindung sind die nach diesem Verfahren hergestellten mehrfunktionellen Polyisocyanat-Polyadditionsprodukte.

Ein Gegenstand der Erfindung ist ferner die Verwendung der erfindungsgemäßen mehrfunktionellen Polyisocyanat-Polyadditionsprodukte als Bausteine zur Herstellung von Lacken, Überzügen, Klebstoffen, Dichtmassen, Gießelastomeren oder Schaumstoffe sowie die Herstellung von Polyadditions- oder Polykondensationsprodukten, erhältlich unter Verwendung der erfindungsgemäßen mehrfunktionellen Polyisocyanat-Polyadditionsprodukte.

Unter einem mehrfunktionellen Polyisocyanat-Polyadditionsprodukt ist im Rahmen dieser Erfindung ein Produkt zu verstehen, das im Mittel mehr als zwei, bevorzugt mindestens drei, stärker bevorzugt mindestens vier, mehr bevorzugt mindestens sechs, und besonders bevorzugt mindestens zehn freie OH-, NH-, SH- oder COOH-Gruppen, gegebenenfalls auch in Mischung, aufweist. Die Anzahl der funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die mehrfunktionellen Polyisocyanat-Polyadditionsprodukte der vorliegenden Erfindung weisen zumeist nicht mehr als 100 funktionelle Gruppen, bevorzugt nicht mehr als 50 funktionelle Gruppen auf. In einer bevorzugten Ausführungsform handelt es sich bei den erfindungsgemäßen mehrfunktionellen Polyisocyanat-Polyadditionsprodukten um mehrfunktionelle Polyurethane oder Polyurethanharnstoffe.

Die bei der Herstellung des Additionsproduktes (A) verwendeten mit Isocyanatgruppen reaktive Komponenten (a) sind aus Verbindungen ausgewählt, die mindestens zwei mit Isocyanatgruppen reaktive Gruppen tragen. Hierbei sind Hydroxylgruppen, Mercaptogruppen, Säuregruppen und/oder Aminogruppen aufweisende Produkte bevorzugt.

Ebenfalls besonders bevorzugt können zur Herstellung des Additionsprodukts (A) Verbindungen mit mindestens zwei mit Isocyanat reaktiven Gruppen verwendet werden, deren reaktive Gruppen aus den oben genannten funktionellen Gruppen oder Gemischen davon ausgewählt sind und deren funktionelle Gruppen gegenüber NCO-Gruppen eine unterschiedliche Reaktivität aufweisen. Bevorzugt sind dabei Verbindungen mit mindestens einer primären und mindestens einer sekundären oder tertiären Hydroxylgruppe, mindestens einer Hydroxylgruppe und mindestens einer Mercaptogruppe, mindestens einer Hydroxylgruppe und mindestens einer Säuregruppe oder mindestens einer Hydroxylgruppe und mindestens einer Aminogruppe im Molekül.

Weiterhin bevorzugt sind mit Isocyanat reaktive Verbindungen, deren mit Isocyanat reaktive funktionelle Gruppen zunächst gleich reaktiv sind, bei denen sich jedoch durch Addition mindestens eines Isocyanates ein Reaktivitätsabfall, bedingt durch sterische oder elektronische Einflüsse, bei den restlichen mit Isocyanat reaktiven Gruppen induzieren läßt. Dies ist beispielsweise bei der Verwendung von Trimethylolpropan oder Pentaerythrit als Komponente (a) der Fall.

Beispiele für Verbindungen (a) mit mehr als zwei mit Isocyanatgruppen reaktiven Gruppen sind Glycerin, Trimethylolmethan, Trimethylolethan, Trimethylolpropan, 1,2,4-Butantriol, 2-Amino-1,3-propandiol, 2-Amino-2-methyl-1,3-propandiol, Diethanolamin, Triethanolamin, Dipropanolamin, Tripropanolamin, Diisopropanolamin, Triisopropanolamin, Ethanolpropanolamin, Tris(hydroxymethyl)aminomethan, Tris(hydroxyethyl)aminomethan, Bis(aminoethyl)amin, Bis(aminopropyl)amin, Tris(aminoethyl)amin, Tris(aminopropyl)amin, Trisaminononan, Melamin, Dimethylolpropionsäure, Dimethylolbuttersäure, Glycerincarbonsäure, Serin, Weinsäure, Pentaerythrit, Bis(trimethylolpropan) oder Zucker, wie zum Beispiel Glucose, tri- oder tetrafunktionelle Polyether- oder Polyesterole. Dabei sind Glycerin, Trimethylolethan, Trimethylolpropan, 1,2,4-Butantriol, Pentaerythrit, Diethanolamin, Dipropanolamin, Diisopropanolamin, Tris(hydroxymethyl)-aminomethan, Tris(hydroxyethyl)aminomethan und Dimethylolpropionsäure besonders bevorzugt.

Beispiele für Verbindungen (a) mit zwei mit Isocyanatgruppen reaktiven Gruppen sind Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Glycerinmonostearat, Glycerinmonooleat, Propan-1,2-dithiol, Butan-1,2-dithiol, Mercaptoethanol, Mercaptopropanol, Mercaptobutanol, Ethylendiamin, Propylendiamin, Butylendiamin, Hexamethylendiamin, Toluylendiamin, Isophorondiamin, Cysteamin, Ethanolamin, N-Methylethanolamin, Propanolamin, Isopropanolamin, N-Methyldiethanolamin, N-Butyldiethanolamin, N-Phenyldiethanolamin, N-Methyldipropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Aminopropanthiol oder difunktionelle Polyether- oder Polyesterole. Dabei sind Ethylenglykol, 1,2-Propandiol, 1,2- und 1,3-Butandiol, Ethanolamin, Propanolamin, Mercaptoethanol, N-Methyldiethanolamin, 4-Hydroxypiperidin und 1-Hydroxyethylpiperazin besonders bevorzugt.

Weiterhin sind auch Mischungen der genannten Verbindungen einsetzbar.

Als Di- und Polyisocyanate (b) kommen die aus dem Stand der Technik bekannten aliphatischen, cycloaliphatischen und aromatischen Isocyanate in Frage. Bevorzugte Di- oder Polyisocyanate sind 4,4'-Diphenylmethandiisocyanat, die Mischungen aus monomeren Diphenylmethandiisocyanaten und oligmeren Diphenylmethandiisocyanaten (Polymer-MDI), Tetramethylendiisocyanat, Hexamethylendiisocyanat, 4,4'-Methylenbis(cyclohexyl)-diisocyanat, Xylylendiisocyanat, Tetramethylxylylendiisocyanat Dodecyldiisocyanat, Lysinalkylester-diisocyanat, wobei Alkyl für C₁ bis C₁₀ steht, 2,2,4- oder 2,4,4-Trimethyl-1,6-hexamethylendiisocyanat, 1,4-Diisocyanatocyclohexan oder 4-Isocyanatomethyl-1,8-octamethylendiisocyanat.

Besonders bevorzugt sind Di- oder Polyisocyanate (b) mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-l-methylcyclohexyl-isocyanat, 1,4-Diisocyanato-4-methylpentan, 2,4'-Methylenbis(cyclohexyl)-diisocyanat und 4-Methyl-cyclohexan-1,3-diisocyanat (H-TDI). Weiterhin sind Isocyanate (b) besonders bevorzugt, deren NCO-Gruppen zunächst gleich reaktiv sind, bei denen sich jedoch durch Erstaddition eines Alkohols oder Amins an einer NCO-Gruppe ein Reaktivitätsabfall bei der zweiten NCO-Gruppe induzieren läßt. Beispiele dafür sind Isocyanate, deren NCO-Gruppen über ein delokalisiertes Elektronensystem gekoppelt sind, z.B. 1,3- und 1,4-Phenylendiisocyanat, 1,5-Naphthylendiisocyanat, Diphenyldiisocyanat, Tolidindiisocyanat oder 2,6-Toluylendiisocyanat.

Weiterhin können weiterhin beispielsweise Oligo- oder Polyisocyanate verwendet werden, die sich aus den genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

Bei der Herstellung des Additionsprodukts (A) ist es notwendig, das Umsetzungsverhältnis der Komponenten mit Isocyanat-reaktiven Gruppen (a) zu dem Di- oder Polyisocyanat (b) so einzustellen, dass das resultierende Additionsprodukt (A) im Mittel nur eine NCO-Gruppe und mehr als eine mit Isocyanat reaktive Gruppe enthält.

Beispielsweise liegt bei der Herstellung des Additionsprodukts (A) aus einem Diisocyanat und einem zweiwertigen Alkohol das molare Einsatzverhältnis bei 1:1, veranschaulicht durch die allgemeine Formel 1, 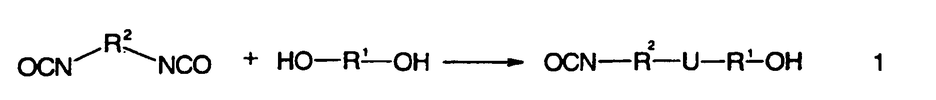 bei der Herstellung des Additionsproduktes (A) aus einem Diisocyanat und einem dreiwertigen Alkohol das molare Einsatzverhältnis bei 1 : 1, veranschaulicht durch die allgemeine Formel 2, 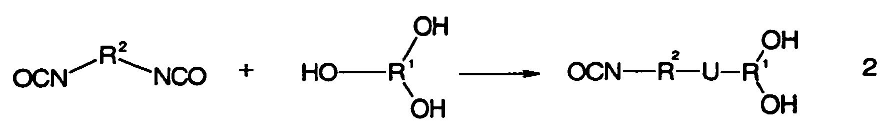 und bei der Herstellung des Additionsproduktes (A) aus einem Diisocyanat und einem vierwertigen Alkohol ebenfalls das molare Einsatzverhältnis bei 1 : 1, veranschaulicht durch die allgemeine Formel 3, 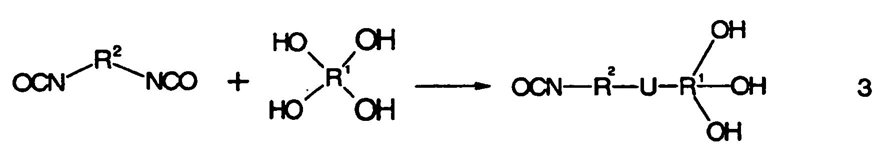 wobei in den Formeln 1 bis 3 R¹ und R² einen organischen Rest und U eine Urethangruppe bedeuten.

Weiterhin kann die Herstellung des Additionsprodukts (A) zum Beispiel auch aus einem Triisocyanat und einer zweiwertigen, mit Isocyanat reaktiven Komponente (a), veranschaulicht durch die allgemeine Formel 4 erfolgen, wobei hier das Einsatzverhältnis bei molar 1:2 liegt, R¹ und R² die gleiche Bedeutung wie in den Formeln 1 bis 3 haben und Y eine Harnstoffgruppe bedeutet. 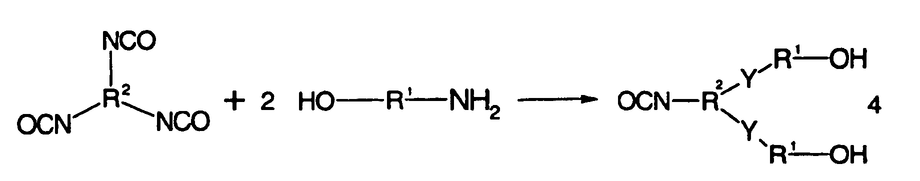 Werden zur Komponente (a1) zusätzlich Verbindungen mit zwei mit Isocyanatgruppen reaktiven Gruppen (a2) zugegeben, so bewirkt dies eine Verlängerung der Ketten. Wie beispielsweise in der allgemeinen Formel 5 veranschaulicht, muss für jedes Mol der Komponente (a2) ein weiteres Mol an Komponente (b) zugegeben werden. 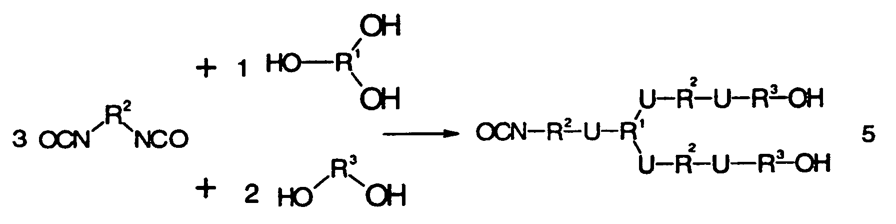 In Formel 5 bedeutet R³ einen organischen Rest, R¹, R² und U sind wie vorstehend beschrieben definiert.

Die Umsetzung zum Additionsprodukt (A) erfolgt üblicherweise bei einer Temperatur von -20 bis 120°C, bevorzugt bei -10 bis 100°C. In einer bevorzugten Ausführungsform wird die IsocyanatKomponente (b) vorgelegt und die Komponente (a) zugegeben. Die Additionsprodukte (A) sind üblicherweise nicht über einen längeren Zeitraum stabil und werden daher bevorzugt direkt mit der mit Isocyanatgruppen reaktiven Komponente (c) umgesetzt.

In einer bevorzugten Ausführungsform kann das Additionsproduktes (A) durch eine intermolekulare Additionsreaktion des Additionsproduktes (A) in ein Polyadditionsprodukt (P) überführt werden. Hierbei addieren sich die mit Isocyanat reaktiven Gruppen des Additionsproduktes (A) an die eine Isocyanatgruppe eines weiteren Additionsproduktes (A). Die Anzahl der Additionsprodukte (A), die sich zu einem Polyadditionsprodukt (P) addieren, ist im allgemeinen nicht beschränkt. Aus praktischen Gesichtspunkten wird üblicherweise die Additionsreaktion abgebrochen, bevor das Polyadditionsprodukt (P), z.B. aufgrund eines zu hohen Molekulargewichts oder aus sterischen Gründen, nachteilige Eigenschaften, wie beispielsweise eine zu hohe Viskosität oder eine zu schlechte Löslichkeit, aufweist.

Aufgrund der Beschaffenheit der Additionsprodukte (A) ist es möglich, daß aus der Additionsreaktion verschiedene Polyadditionsprodukte (P) resultieren können, die Verzweigungen aber keine Vernetzungen aufweisen. Ferner weisen die Polyadditionsprodukte (P) eine Isocyanatgruppe und mehr als zwei mit Isocyanatgruppen reaktive Gruppen auf. Die Anzahl der mit Isocyanatgruppen reaktiven Gruppen ergibt sich dabei aus der Beschaffenheit der eingesetzten Additionsprodukte (A) und dem Polyadditionsgrad.

Beispielsweise kann ein Additionsprodukt (A) gemäß der allgemeinen Formel 2 durch dreifache intermolekulare Addition zu zwei verschiedenen Polyadditionsprodukten (P), die in den allgemeinen Formeln 6 und 7 wiedergegeben werden, reagieren.

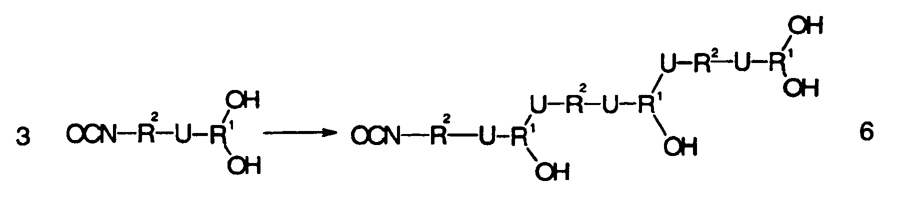

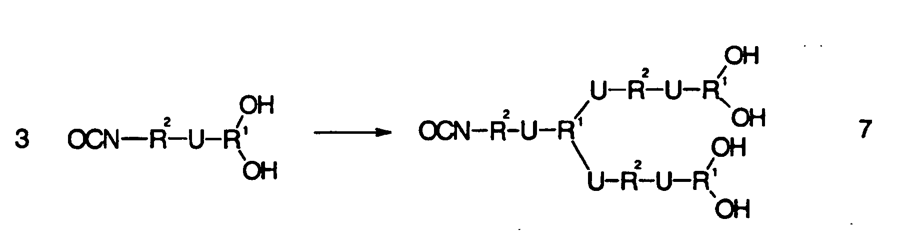

In Formel 6 und 7 sind R¹, R² und U wie vorstehend definiert.

Die intermolekulare Polyadditionsreaktion eines Additionsproduktes (A) zu einem Polyadditionsprodukt (P) kann üblicherweise in situ nach Beendigung der Reaktion zu dem Additionsprodukt (A) durch eine Temperaturerhöhung durchgeführt werden.

Weiterhin kann auch ein geeigneter Katalysator oder ein geeignetes Katalysatorgemisch zugegeben werden. Geeignete Katalysatoren sind im allgemeinen Verbindungen, die Urethan-Reaktionen katalysieren, zum Beispiel Amine, Ammoniumverbindungen, Aluminium-, Zinn-, Titan-, Zirkon-, oder Wismutorganische Verbindungen.

Beispielsweise können genannt werden Diazabicyclooctan (DABCO), Diazabicyclononen (DBN) und Diazabicycloundecen (DBU), Titantetrabutylat, Dibutylzinn-dilaurat, Zirkonacetylacetonat oder Gemische davon.

Die Zugabe des Katalysators erfolgt im allgemeinen in einer Menge von 50 bis 10000, bevorzugt von 100 bis 5000 Gew. ppm bezogen auf die Menge des eingesetzten Isocyanats.

Ferner ist es auch möglich, sowohl durch Zugabe eines geeigneten Katalysators, als auch durch Wahl einer geeigneten Temperatur die intermolekulare Polyadditionsreaktion zu steuern.

Zum Abbruch der intermolekularen Polyadditionsreaktion gibt es verschiedene Möglichkeiten. Beispielsweise kann die Temperatur auf einen Bereich abgesenkt werden, in dem die Additionsreaktion zum Stillstand kommt und das Additionsprodukt (A) oder das Polyadditionsprodukt (P) lagerstabil ist.

In einer bevorzugten Ausführungsform wird, sobald aufgrund der intermolekularen Additionsreaktion des Additionsproduktes (A) ein Polyadditionsprodukt (P) mit gewünschten Polyadditionsgrad vorliegt, dem Polyadditionsprodukt (P) zum Abbruch der Polyadditionsreaktion eine mindestens difunktionelle, mit Isocyanatgruppen reaktive Komponente (c) zugegeben. Durch Umsetzung des Polyadditionsprodukts (P) mit der Komponente (c) erhält man die erfindungsgemäßen mehrfunktionellen Polyisocyanat-Polyadditionsprodukte.

Wird beispielsweise zu einem Polyadditionsprodukt (P) der allgemeinen Formel 6 ein Diamin als Komponente (c) im Verhältnis 2 :1 gegeben, so ist ein erfindungsgemäßes mehrfunktionelles Polyisocyanat-Polyadditionsprodukt, in diesem Fall ein Polyurethanpolyol, der allgemeinen Formel 8 erhältlich.

In Formel 8 sind R¹, R² Y und U wie vorstehend definiert und R⁴ bedeutet einen organischen Rest, der vorzugsweise nicht mit R¹ identisch ist.

Alternativ kann die mindestens difunktionelle, mit Isocyanatgruppen reaktive Komponente (c) auch zu einem Additionsprodukt (A) gegeben werden, das noch nicht in einer intermolekularen Additionsreaktion zu einem Polyadditionsprodukt (P) umgesetzt wurde.

Es ist jedoch zumeist technisch vorteilhaft, die intermolekulare Additionsreaktion zumindest in geringen Umfang durchzuführen, da gegebenenfalls im Additionsprodukt (A) noch geringe Mengen Di- oder Polyisocyanat (b) als Verunreinigung enthalten sein können und diese Verunreinigungen dann durch die intermolekulare Polyadditionsreaktion in das Polyadditionsprodukt (P) mit eingebaut werden können.

Bei der Umsetzung des Additionsproduktes (A) oder des Polyadditionsprodukts (P) mit der mindestens difunktionellen, mit Isocyanatgruppen reaktiven Komponente (c) wird üblicherweise mindestens eine mit Isocyanat reaktive Gruppe der Komponente (c) mit der mit Isocyanatgruppe des Additionsprodukts (A) oder des Polyadditionsprodukts (P) zur Reaktion gebracht. In einer bevorzugten Ausführungsform werden 40 bis 100 % der freien mit Isocyanat reaktiven Gruppen der Komponente (c) mit einer entsprechenden Anzahl an Äquivalenten eines Additionsproduktes (A) oder Polyadditionsprodukts (P) zu dem erfindungsgemäßen mehrfunktionellen Polyurethan umgesetzt.

In einer weiteren Ausführungsform wird zuerst eine mit Isocyanatgruppen reaktive Gruppe der Komponente (c) mit einem Additionsprodukt (A1) oder einem Polyadditionsprodukt (P1) umgesetzt, anschließend wird mindestens eine weitere mit Isocyanatgruppen reaktive Gruppe der Komponente (c) mit einem Additionsprodukt (A2) oder einem Polyadditionsprodukt (P2) umgesetzt, wobei die Additionsprodukte (A1) und (A2) bzw. die Polyadditionsprodukte (P1) und (P2) nicht identisch sind. Für diese Ausführungsform werden vorzugsweise als Komponenten (c) Di- oder Polyole, Di- oder Polyamine oder Aminoalkohole verwendet, die mit Isocyanatgruppen reaktive Gruppen mit unterschiedlicher Reaktivität gegenüber den Isocyanatgruppen der Komponenten (A) und (P) aufweisen.

Die Herstellung der erfindungsgemäßen mehrfunktionellen Polyisocyanat-Polyadditionsprodukte erfolgt zumeist in Lösungsmitteln. Dabei können im allgemeinen alle Lösungsmittel verwendet werden, die gegenüber den jeweiligen Edukten inert sind. Bevorzugt verwendet werden organische Lösungsmittel, wie zum Beispiel Diethylether, Tetrahydrofuran, Dioxan, Aceton, Butanon-2, Methylisobutylketon, Essigester, Butylacetat, Benzol, Toluol, Chlorbenzol, Xylol, Methoxyethylacetat, Methoxypropylacetat, Dimethylformamid, Dimethylacetamid, N-Methylpyrrolidon oder Solventnaphtha.

Die Herstellung der erfindungsgemäßen mehrfunktionellen Polyisocyanat-Polyadditionsprodukte erfolgt zumeist in einem Druckbereich von 2 mbar bis 20 bar, bevorzugt bei Normaldruck, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Die durch das erfindungsgemäße Verfahren erhaltenen mehrfunktionellen Polyisocyanat-Polyadditionsprodukte können bei Bedarf auch hydrophobiert, hydrophiliert oder umfunktionalisiert werden. Dazu können die OH-, SH- oder NH-terminierten Produkte z.B. mit gesättigten oder ungesättigten Carbonsäuren oder deren gegenüber OH-, SH- oder NH-Gruppen reaktiven Derivaten, Sulfonsäuren oder deren gegenüber OH-, SH- oder NH-Gruppen reaktiven Derivaten oder Isocyanatgruppen enthaltenden Verbindungen umgesetzt oder teilumgesetzt werden. Enthalten die erfindungsgemäßen Polyadditionsprodukte Säuregruppen oder tertiäre Aminogruppen, so können sie zum Beispiel durch Säure/Base-Reaktionen wasserlöslich eingestellt werden.

Ein weiterer Vorteil der vorliegenden Erfindung ist, dass die Funktionalitäten von herkömmlichen, technischen Alkoholen, Thioalkoholen, Aminen oder Aminoalkoholen deutlich erhöht werden können. Wird beispielsweise ein handelsübliches Polyetherpolyol mit einer mittleren OH-Funktionalität von 3 mit einem Addukt (A) aus einem Mol Diisocyanat und einem Mol Tris(hydroxymethyl)-aminomethan umgesetzt, so wird die mittlere Funktionalität des resultierenden Polyurethanpolyols bei 9 liegen.

Ein Vorteil der erfindungsgemäßen Polyurethane mit hoher Funktionalität ist, dass bei deren Verwendung, zum Beispiel zum Aufbau eines Polyurethan-Netzwerkes, der Aufbau des Netzwerks nicht, wie üblich, statistisch aus Polyol und Polyisocyanat erfolgt, sondern bereits Strukturen mit definierter Abfolge von Molekülen und vorher definierten Eigenschaften in das Netzwerk eingebaut werden.

Ein weiterer Vorteil des erfindungsgemäßen Verfahren liegt in seiner Wirtschaftlichkeit. Sowohl die Umsetzung zu einem Additionsprodukt (A) oder Polyadditionsprodukt (P) als auch die Reaktion von (A) oder (P) zu einen mehrfunktionellen Polyurethan kann in einer Reaktionsvorrichtung erfolgen, was technisch und wirtschaftlich vorteilhaft ist.

## Patentansprüche

1. Verfahren zur Herstellung von mehrfunktionellen Polyisocyanat-Polyadditionsprodukten, umfassend
(i) Herstellen eines Additionsproduktes (A) durch Umsetzen einer
(a) mit Isocyanatgruppen reaktiven, mindestens trifunktionellen Komponente (a1) oder einer mit Isocyanatgruppen reaktiven difunktionellen Komponente (a2) oder mit einem Gemisch aus den Komponenten (a1) und (a2) mit
(b) Di- oder Polyisocyanat,
wobei das Umsetzungsverhältnis so gewählt wird, dass im Mittel das Additionsprodukt (A) eine Isocyanatgruppe und mehr als eine mit Isocyanatgruppen reaktive Gruppe enthält,
(ii) gegebenenfalls intermolekulare Additionsreaktion des Additionsprodukts (A) zu einem Polyadditionsprodukt (P), das im Mittel eine Isocyanatgruppe und mehr als zwei mit Isocyanatgruppen reaktive Gruppen enthält und
(iii) Umsetzen des Additionsproduktes (A) oder des Polyadditionsproduktes (P) mit einer mindestens difunktionellen, mit Isocyanatgruppen reaktiven Komponente (c).

2. Verfahren nach Anspruch 1, **dadurch gekennzeichnet, dass** die mit Isocyanatgruppen reaktive Komponente (c) und die mit Isocyanatgruppen reaktiven Komponenten (a1) und (a2) verschieden sind.

3. Verfahren nach Anspruch 1 oder 2, **dadurch gekennzeichnet, dass** mindestens eine der Komponenten (a) oder (b) funktionelle Gruppen mit gegenüber den funktionellen Gruppen der anderen Komponente unterschiedlicher Reaktivität aufweist.

4. Verfahren nach einem der Ansprüche 1 bis 3, **dadurch gekennzeichnet, dass** die mit Isocyanatgruppen reaktiven Gruppen der Komponenten (a1), (a2) und (c) aus Hydroxylgruppen, Mercaptogruppen, Aminogruppen, Carbonsäuregruppen oder einem Gemisch davon ausgewählt sind.

5. Verfahren nach einem der Ansprüche 1 bis 4, **dadurch gekennzeichnet, dass** das Di- oder Polyisocyanat (b) Verbindungen mit im Mittel zwei bis vier Isocyanatgruppen pro Molekül oder Gemische davon enthält.

6. Verfahren nach einem der Ansprüche 1 bis 5, **dadurch gekennzeichnet, dass** bei der Umsetzung des Additionsproduktes (A) oder des Polyadditionsprodukts (P) mit der mit Isocyanatgruppen reaktiven Komponente (c) das Verhältnis von Isocyanat-reaktiven Gruppen der Verbindung (c) zu den Isocyanatgruppen des Additionsproduktes (A) oder des Polyadditionsprodukts (P) so gewählt wird, daß mindestens 10 %, vorzugsweise mindestens 40 % der Isocyanat-reaktiven Gruppen der Verbindung (c) umgesetzt werden.

7. Verfahren nach einem der Ansprüche 1 bis 6, **dadurch gekennzeichnet, dass** als mit Isocyanat-reaktive Komponente (a1) Glycerin, Trimethylolpropan, Pentaerythrit, Diethanolamin, Dipropanolamin, Diisopropanolamin, Tris(hydroxymethyl)aminomethan, Dimethylolpropionsäure, als Komponente (a2) Ethylenglykol, Propylenglykol, Butandiol, Hexandiol, Mercaptoethanol, Ethanolamin, Propanolamin, Butanolamin, N-Methyldiethanolamin und als Komponente (c) Ethylenglykol, Butandiol, Hexandiol, Glycerin, Trimethylolpropan, Pentaerythrit, Tris(hydroxymethyl)aminomethan, Ammoniak, Hexamethylendiamin, Isophorondiamin, Tris(aminoethyl)amin, Triaminononan, Melamin, Triethanolamin, Tris(aminoethyl)amin, Polyethylenimin oder Polyvinylamin verwendet wird.

8. Mehrfunktionelle Polyisocyanat-Polyadditionsprodukte, herstellbar nach einem der Ansprüche 1 bis 7.

9. Mehrfunktionelle Polyisocyanat-Polyadditionsprodukte, herstellbar nach einem der Ansprüche 1 bis 7, **dadurch gekennzeichnet, dass** die Moleküle sowohl aliphatisch als auch aromatisch gebundene, mit Isocyanat reaktive Gruppen aufweisen.

10. Verwendung der mehrfunktionellen Polyisocyanat-Polyadditionsprodukte nach Anspruch 8 oder 9 zur Herstellung von Beschichtungen, Lacken, Überzügen, Klebstoffen, Dichtmassen, Gießelastomeren oder Schaumstoffen.

11. Polyadditionsprodukte und/oder Polykondensationsprodukte, erhältlich unter Verwendung der mehrfunktionellen Polyisocyanat-Polyadditionsprodukte nach Anspruch 8 oder 9.

## Claims

1. A process for the preparation of polyfunctional polyisocyanate polyadducts, comprising
(i) preparation of an adduct (A) by reacting
(a) an at least trifunctional component (a1) reactive with isocyanate groups or a
a difunctional component (a2) reactive with isocyanate groups or a mixture of the components (a1) and (a2) with
(b) a di- or polyisocyanate,
the reaction ratio being chosen so that on average the adduct (A) contains one isocyanate group and more than one group reactive with isocyanate groups,
(ii) if required, intermolecular addition reaction of the adduct (A) to give a polyadduct (P) which comprises on average one isocyanate group and more than two groups reactive with isocyanate groups, and
(iii) reaction of the adduct (A) or of the polyadduct (P) with an at least difunctional component (c) reactive with isocyanate groups.

2. A process as claimed in claim 1, wherein the component (c) reactive with isocyanate groups and the components (a1) and (a2) reactive with isocyanate groups are different.

3. A process as claimed in claim 1 or 2, wherein at least one of the components (a) and (b) has functional groups having a reactivity which differs with respect to the functional groups of the other component.

4. A process as claimed in any of claims 1 to 3, wherein the groups reactive with isocyanate groups and belonging to the components (a1), (a2) and (c) are selected from hydroxyl groups, mercapto groups, amino groups, carboxyl groups or a mixture thereof.

5. A process as claimed in any of claims 1 to 4, wherein the di- or polyisocyanate (b) comprises compounds having on average two to four isocyanate groups per molecule or mixtures thereof.

6. A process as claimed in any of claims 1 to 5, wherein, in the reaction of the adduct (A) or the polyadduct (P) with the component (c) rective with isocyanate groups, the ratio of isocyanate-reactive groups of the compound (c) to the isocyanate groups of the adduct (A) or of the polyadduct (P) is chosen so that at least 10%, preferably at least 40% of the isocyanate-reactive groups of the compound (c) are reacted.

7. A process as claimed in any of claims 1 to 6, wherein glycerol, trimethylolpropane, pentaerythritol, diethanolamine, dipropanolamine, diisopropanolamine, tris(hydroxymethyl)aminomethane or dimethylolpropionic acid is used as component (a1) reactive with isocyanate, ethylene glycol, propylene glycol, butanediol, hexanediol, mercaptoethanol, ethanolamine, propanolamine, butanolamine or N-methyldiethanolamine is used as component (a2) and ethylene glycol, butanediol, hexanediol, glycerol, trimethylolpropane, pentaerythritol, tris(hydroxymethyl)aminomethane, ammonia, hexamethylenediamine, isophoronediamine, tris(aminoethyl)amine, triaminononane, melamine, triethanolamine, tris(aminoethyl)amine, polyethyleneimine or polyvinylamine is used as component (c).

8. A polyfunctional polyisocyanate polyadduct, which can be prepared as claimed in any of claims 1 to 7.

9. A polyfunctional polyisocyanate polyadduct, which can be prepared as claimed in any of claims 1 to 7, wherein the molecule has both aliphatically and aromatically bonded groups reactive with isocyanate.

10. The use of a polyfunctional polyisocyanate polyadduct as claimed in claim 8 or 9 for the production of coatings, finishes, coverings, adhesives, sealing compounds, casting elastomers or foams.

11. A polyadduct or polycondensate obtainable using a polyfunctional polyisocyanate polyadduct as claimed in claim 8 or 9.

## Revendications

1. Procédé de préparation de produits de polyaddition de polyisocyanate plurifonctionnels, comprenant
(i) une préparation d'un produit d'addition (A) par réaction
(a) d'un composant réactif vis-à-vis des groupes isocyanate, au moins trifonctionnel (a1) ou d'un composant réactif vis-à-vis des groupes isocyanate, difonctionnel (a2) ou d'un mélange des composants (a1) et (a2), avec
(b) du diisocyanate ou polyisocynate, le rapport réactionnel étant choisi de façon qu'en moyenne le produit d'addition (A) contienne un groupe isocyanate et plus d'un groupe réactif vis-à-vis des groupes isocyanate,
(ii) éventuellement une réaction d'addition intermoléculaire du produit d'addition (A) pour former un produit de polyaddition (P), qui contient en moyenne un groupe isocyanate et plus de deux groupes réactifs vis-à-vis des groupes isocyanate, et
(iii) une réaction du produit d'addition (A) ou du produit de polyaddition (P) avec un composant réactif vis-à-vis des groupes isocyanate, au moins difonctionnel (c).

2. Procédé suivant la revendication 1, **caractérisé en ce que** le composant réactif vis-à-vis des groupes isocyanate (c) et les composants réactifs vis-à-vis des groupes isocyanate (a1) et (a2) sont différents.

3. Procédé suivant la revendication 1 ou 2, **caractérisé en ce qu'**au moins un des composants (a) ou (b) présente des groupes fonctionnels ayant une réactivité différente des groupes fonctionnels de l'autre composant.

4. Procédé suivant l'une des revendications 1 à 3, **caractérisé en ce que** les groupes réactifs vis-à-vis des groupes isocyanate des composants (a1), (a2) et (c) sont choisis parmi des groupes hydroxyle, mercapto, amino, acide carboxylique ou un de leurs mélanges.

5. Procédé suivant l'une des revendications 1 à 4, **caractérisé en ce que** le diisocyanate ou polyisocyanate (b) contient des composés avec en moyenne 2 à 4 groupes isocyanate par molécule ou leurs mélanges.

6. Procédé suivant l'une des revendications 1 à 5, **caractérisé en ce que**, lors de la réaction du produit d'addition (A) ou du produit de polyaddition (B) avec le composant réactif vis-à-vis des groupes isocyanate (c), le rapport entre les groupes réactifs vis-à-vis d'un isocyanate du composé (c) et les groupes isocyanate du produit d'addition (A) ou du produit de polyaddition (P) est choisi de façon qu'au moins 10 %, de préférence au moins 40 %, des groupes réactifs vis-à-vis d'un isocyanate du composé (c) soient mis à réagir.

7. Procédé suivant l'une des revendications 1 à 6, **caractérisé en ce que**, comme composant réactif vis-à-vis d'un isocyanate (a1), on utilise de la glycérine, du triméthylolpropane, du pentaérythritol, de la diéthanolamine, de la dipropanolamine, de la diisopropanolamine, du tris(hydroxyméthyl)aminométhane, de l'acide diméthylolpropionique, comme composant (a2), de l'éthylèneglycol, du propylèneglycol, du butanediol, de l'hexanediol, du mercaptoéthanol, de l'éthanolamine, de la propanolamine, de la butanolamine, de la N-méthyldiéthanolamine, et, comme composant (c), de l'éthylèneglycol, du butanediol, de l'hexanediol, de la glycérine, du triméthylolpropane, du pentaérythritol, du tris(hydroxyméthyl)aminométhane, de l'ammoniac, de l'hexaméthylènediamine, de l'isophoronediamine, de la tris(aminoéthyl)-amine, du triaminononane, de la mélamine, de la triéthanolamine, de la tris(aminoéthyl)-amine, de la polyéthylèneimine ou de la polyvinylamine.

8. Produits de polyaddition de polyisocyanate plurifonctionnels, préparables suivant une des revendications 1 à 7.

9. Produits de polyaddition de polyisocyanate plurifonctionnels préparables suivant une des revendications 1 à 7, **caractérisés en ce que** les molécules présentent des groupes réactifs vis-à-vis d'un isocyanate qui sont liés de manière aussi bien aliphatique qu'aromatique.

10. Utilisation des produits de polyaddition de polyisocyanate plurifonctionnels suivant la revendication 8 ou 9, pour la préparation d'enductions, de vernis, de revêtements, d'adhésifs, de masses d'étanchéité, d'élastomères de moulage ou de mousses.

11. Produits de polyaddition et/ou produits de polycondensation, que l'on peut obtenir par utilisation des produits de polyaddition de polyisocyanate plurifonctionnels suivant la revendication 8 ou 9.
